## Europäisches Patentamt
## European Patent Office
## Office européen des brevets

(19)

(11) Numéro de publication: **0 013 433**
**B1**

(12)

# FASCICULE DE BREVET EUROPEEN

(45) Date de publication du fascicule du brevet: 05.05.82

(51) Int. Cl.³: **C 04 B 35/58, C 04 B 41/02**

(21) Numéro de dépôt: **79105398.6**

(22) Date de dépôt: **28.12.79**

(54) Matériau résistant à l'oxydation à chaud à base de nitrure de silicium, et procédé de fabrication de ce matériau.

(30) Priorité: **05.01.79 FR 7900268**

(43) Date de publication de la demande:
**23.07.80 Bulletin 80/15**

(45) Mention de la délivrance du brevet:
**05.05.82 Bulletin 82/18**

(84) Etats contractants désignés:
**DE GB IT**

(56) Documents cités:
FR - A - 1 422 049
FR - A - 2 059 082
FR - A - 2 098 120
FR - A - 2 339 584
GB - A - 1 277 574
US - A - 3 983 198

JOURNAL OF MATERIALS SCIENCE, vol. 7,
1972, Chapman and Hall, London GB
A. ATKINSON et al.: "The nitriding of silicon
powder compacts" pages 482—484.

(73) Titulaire: **ASSOCIATION POUR LA RECHERCHE ET
LE DEVELOPPEMENT DES METHODES ET
PROCESSUS INDUSTRIELS (ARMINES)
60, Boulevard Saint-Michel
F-75272 Paris Cédex 06 (FR)**

(72) Inventeur: **Barlier, Pernette
1 Square Auguste Renoir
F-75014 Paris (FR)**
Inventeur: **Torre, Jean-Paul
1 Allée des Chardonnerets Ormoy
F-91540 Mennecy (FR)**

(74) Mandataire: **Weinmiller, Jürgen et al,
Zeppelinstrasse 63
D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 013 433 B1

**0 013 433**

Matériau résistant à l'oxydation à chaud à base de nitrure de silicium,
et procédé de fabrication de ce matériau

La présente invention concerne un matériau résistant à l'oxydation à chaud, formé par une solution solide d'aluminium et d'oxygène dans le nitrure de silicium, du type des $\beta'$-SiAlON.

Elle s'étend en outre à un procédé de fabrication d'un tel matériau.

On sait que le silicium nitruré est un matériau très intéressant par ses propriétés de résistance à des températures élevées. Il a en outre été montré (J. P. TORRE et A. MOCELLIN, Journal of Materials Science 11, 1976, p. 1725—1733) que la nitruration de pièces en silicium nécessitait le maintien d'une pression partielle d'oxygène extrêment faible pour éviter la stabilisation d'une couche de silice superficielle sur les particules de la poudre de départ et l'apparition dans les pièces de pores relativement gros et de micro-hétérogénéités de structure. Ce contrôle de la pression partielle d'oxygène à l'intérieur des pièces en cours de frittage peut être obtenu par addition à la poudre de silicium d'une petite quantité de poudre d'aluminium (par exemple 6% en poids), ce qui donne une solution solide du type SiAlON.

On observe toutefois que d'une manière générale les pièces en silicium nitruré, même parfois celles additionnées d'une petite quantité d'aluminium, voient leur résistance mécanique diminuer très notablement après avoir été soumises à une oxydation à chaud. Cela paraît dû au fait que les pièces soumises à l'oxydation se recouvrent d'une couche de silice superficielle. La silice superficielle se transforme aux températures de l'oxydation à chaud en cristobalite de la variété cristallographique "beta", dont la transformation en variété "alpha" lors du refroidissement s'accompagne d'une contraction brutale provoquant la fissuration de la couche oxydée. La présence de ces fissures entraîne une diminution de la résistance mécanique. Or les applications les plus fréquemment envisagées pour le silicium nitruré, notamment les pièces pour moteurs Diesel et turbomachines à haut rendement, comportent la présence d'un mélange gazeux oxydant.

Un but de l'invention est donc de procurer un matériau conservant sa résistance mécanique après oxydation à chaud.

Le matériau selon l'invention est caractérisé en ce qu'il comprend de 1% à 10% en poids d'aluminium par rapport au silicium, et comporte une couche superficielle de mullite aciculaire.

Le procédé de fabrication de ce matériau, selon l'invention, est caractérisé en ce que l'on additionne la poudre de silicium, avant son frittage nitrurant sous atmosphère riche en azote, d'environ 1% à 10% en poids d'aluminium, en ce que l'on soumet le nitrure de silicium fritté en présence d'aluminium à une oxydation à chaud dans des conditions telles que l'aluminium et de l'oxygène fourni par l'atmosphère ambiante réagissant sur la silice formée superficiellement pour former de la mullite aciculaire.

Il répond en outre de préférence à au moins l'une des caractéristiques suivantes

—l'on effectue le frittage sur de la poudre de silicium de surface spécifique Blaine d'au moins 5000 cm²/g, et de préférence d'au moins 7500 cm²/g.

—L'on effectue l'oxydation à chaud à l'air à 1400°C environ pendant au moins 50 heures.

—L'on soumet les pièces en silicium nitruré pendant l'oxydation à chaud à un mouvement vibratoire.

On comprendra que l'effet de l'addition de 1 à 10% en poids de poudre d'aluminium à la poudre de silicium sur l'amélioration de la résistance mécanique après oxydation à chaud des pièces en silicium nitruré est indépendant de celui de l'addition d'aluminium au silicium pour éviter l'apparition de gros pores et de micro-hétérogénéites de structure. Ainsi, l'addition d'une faible quantité d'aluminium, insuffisante à ce dernier point de vue, peut néanmoins assurer un maintien de la résistance mécanique après oxydation à chaud, même si celle-ci est plus faible que les valeurs élevées présentées par des pièces exemptes de porosité grossière et d'hétérogénéités de structure.

Il est décrit ci-après à titre d'exemple un procédé de préparation de pièces en silicium nitruré selon l'invention et leurs résistances à la flexion avant et après oxydation à chaud, et à titre de comparaison celles de pièces selon la technique antérieure.

Les pièces en silicium nitruré ont été préparées à partir soit de poudres de silicium de haute pureté (99,96%) vendu par la société américaine Cerac, d'une part à l'état brut avec une surface spécifique Blaine de 2500 cm²/g, d'aute par après broyage jusqu'à une surface spécifique Blaine de 5500 cm²/g, soit de poudre de silicium de qualité commerciale vendu par la Société allemande Starck, de pureté 99% et de surface spécifique 7700 cm²/g. La poudre d'aluminium utilisée était le produit de pureté 99% et de surface spécifique 10000 cm²/g vendu par la Société française Baudier.

Dans tous les cas, la poudre de silicium a été additionnée de 6% en poids de poudre d'aluminium. Après mélange à sec pendant 24 h dans un mélangeur Turbula, des éprouvettes ont été pressées sans liant de façon isostatique sous 196 MN/m².

Les comprimés, taillés sous la forme de barreaux parallélépipèdiques de dimensions approximatives 30 × 10 × 6 mm, ont été nitrurés dans un four horizontal à baguettes de carbure de silicium par séries de 10 barreaux. Le programme de traitement thermique était le suivant:

—montée de l'ambiante à 1350°C en 6h

—maintien à 1350°C pendant 72h

2

**0013433**

—montée de 1350°C à 1450°C en 6h
—maintien à 1450°C pendant 24h
—refroidissement jusqu'à l'ambiante en une douzaine d'heures

Tout le long des traitements le tube laboratoire (en mullite) du four était alimenté par un mélange gazeux contenant 70% d'azote et 30% d'argon sous une pression totale de 1,4 atm. Suivant la granulométrie de la poudre de départ, on a fait varier, d'un essai à l'autre, le débit et le teneur en oxygène du gaz nitrurant (fixée par la température d'un mélange d'oxydes $CuO/Cu_2O$ placé dans un four annexe en amont du four de nitruration). Les débits et teneurs en oxygène utilisés étaient respectivement compris entre 0,9 et 1,8 renouvellements horaires de l'atmosphère du four, d'une part, et 450 et 1000 ppm d'autre part.

Les échantillons nitrurés ont ensuite été usinés sous forme d'éprouvettes de dimensions $25 \times 5 \times 1,5$ mm, dont une partie a été aussitôt rompue au cours d'essais de flexion à quatre points. Les autres ont été oxydées à 1400°C à l'air dans les tubes laboratoires (en mullite) de fours horizontaux à éléments chauffants en carbure de silicium. Les échantillons ont été introduits en deux heures au coeur de la zone chaude des fours préchauffés, puis maintenus de 50 à 120 heures, à l'extrémité de cannes de mullite animées d'un mouvement vibratoire, cela afin d'empêcher la formation de toute couche limite gazeuse protectrice autour des échantillons.

Le tableau ci-dessous permet de comparer les valeurs de la résistance à la rupture par flexion des éprouvettes, avant et après oxydation, à celles d'échantillons commerciaux de silicium nitruré exempt d'aluminium fournis par la Société allemande ROSENTHAL et qui ont été usinés, oxydés et rompus dans les mêmes conditions que les échantillons selon l'invention: l'oxydation n'a provoqué en aucun cas de réduction notable de la résistance à la rupture des échantillons de l'invention, alors que celle du produit commercial connu s'est trouvée dans tous les cas environ réduite de moitié.

| Provenance des échantillons | Etat d'oxydation | Résistance à la rupture moyenne (flexion 4 points) |
|---|---|---|
| | néant | $157,8 \pm 23,1$ MN/m² |
| Poudre de départ : Si CERAC + 6% Al Surface spécifique du silicium : 2500 cm²/g | 50 à 120h à 1400°C | $152,5 \pm 9,9$ MN/m² |
| | néant | $162,6 \pm 16,2$ MN/m² |
| Poudre de départ : Si CERAC + 6% Al Surface spécifique du silicium : 5500 cm²/g | 50 à 120h à 1400°C | $158,5 \pm 17,2$ MN/m² |
| | néant | $173,0 \pm 9,9$ MN/m² |
| Poudre de départ Si STARCK + 6% Al Surface spécifique du silicium : 7700 cm²/g | 50 à 120h à 1400°C | $166,0 \pm 23,0$ MN/m² |
| | néant | $183,5 \pm 12,0$ MN/m² |
| Silicium nitruré connu | 50 à 120h à 1400°C | $91,3 \pm 2,1$ MN/m² |

Bien que le procédé de fabrication qui vient d'être décrit en détail ci-dessus paraisse la forme de mise en oeuvre préférable de l'invention, on comprendra que diverses modifications peuvent lui être apportées sans sortir du cadre de l'invention. En particulier, le programme de traitement thermique de nitruration peut être différent. L'atmosphère de celui-ci peut consister en azote pur (sauf la petite quantité d'oxygène) au lieu d'un mélange d'azote et d'argon. L'oxydation préliminaire peut être effectuée en laissant les pièces immobiles, à condition d'assurer un renouvellement suffisant de l'atmosphère gazeuse à la surface des pièces.

L'invention s'applique à la fabrication de toutes pièces devant résister simultanément à des températures élevées et à une atmosphère oxydante, notamment les pièces pour moteurs à turbines et moteurs à combustion interne.

**0013433**

### Revendications

1. Matériau résistant à l'oxydation à chaud, formé par une solution solide d'aluminium et d'oxygène dans le nitrure de silicium, du type des $\beta'$-SiAlON, à 1 à 10% en poids d'aluminium par rapport au silicium, et comportant une couche superficielle de mullite aciculaire.

2. Procédé de fabrication du matériau selon la revendication 1, par frittage nitrurant de poudre de silicium sous atmosphère riche en azote, caractérisé en ce que l'on additionne la poudre de silicium avant son frittage d'environ 1% à 10% en poids d'aluminium, en ce que l'on soumet le nitrure de silicium fritté en présence d'aluminium à une oxydation à chaud dans des conditions telles que l'aluminium et de l'oxygène fourni par l'atmosphère ambiante réagissent sur la silice formée superficiellement pour former de la mullite aciculaire.

3. Procédé selon la revendication 2, caractérisé en ce que l'on effectue le frittage nitrurant sur de la poudre de silicium de surface spécifique Blaine d'au moins 5000 cm²/g, et de préférence d'au moins 7500 cm²/g.

4. Procédé selon les revendications 2 ou 3, caractérisé en ce que l'on effectue l'oxydation à chaud à l'air à 1400°C environ pendant au moins 50 heures.

5. Procédé selon l'une des revendications 2 à 4, caractérisé en ce que l'on soumet les pièces en silicium nitruré additionné d'aluminium pendant leur oxydation à chaud a un mouvement vibratoire.

### Claims

1. A material which is oxidation resistant when hot, said material being formed by a solid solution of aluminium and oxygen in silicon nitride, of the $\beta'$-SiAlON type containing 1 to 10% by weight of aluminium with respect to silicon, and including a surface layer of acicular mullite.

2. A method of manufacturing the material according to claim 1 by nitriding sintering of silicon powder in an atmosphere rich in nitrogen, characterized in that about 1% to 10% by weight of aluminium is added to the silicon powder before sintering thereof, in that the silicon nitride sintered with aluminium is subjected to hot oxidation in conditions such that the aluminium and oxygen supplied by the ambient atmosphere react on the silica formed at the surface to form acicular mullite.

3. A method according to claim 2, characterized in that nitriding sintering is carried out on the silicon powder with a Blaine specific surface of at least 5000 cm²/g, and preferably at least 7500 cm²/g.

4. A method according to claim 2 or 3, characterized in that hot oxidation is carried out in air at about 1400°C for at least 50 hours.

5. A method according to one of the claims 2 to 4, characterized in that the nitrided silicon parts to which aluminium was added are subjected to a vibratory movement during their hot oxidation.

### Patentansprüche

1. Bei Hitze oxydationsbeständiges Material, bestehend aus einer festen Lösung von Aluminium und Sauerstoff in Siliziumnitrid, vom Typ $\beta'$-SiAlOn, mit 1 bis 10 Gewichtsprozent Aluminium in Bezug auf das Silizium, und mit einer Oberflächenschicht aus azikulärem Mullit.

2. Herstellungsverfahren für ein Material nach Anspruch 1, durch Nitridsinterung von Siliziumpulver in stickstofffreier Atmosphäre, dadurch gekennzeichnet, daß man dem Siliziumpulver vor der Sinterung etwa 1 bis 10 Gewichtsprozent Aluminium hinsufügt, daß man das mit Aluminium gesinterte Siliziumnitrid unter solchen Umständen einer Hitzeoxydation unterzieht, daß das Aluminium und der von der Umgebungsluft gelieferte Sauerstoff auf dem oberflächlich entstandenen Siliziumdioxyd reagieren und azikuläres Mullit bilden.

3. Verfahren nach Anspruch 2, dadurch gekennzeichnet, daß die Nitridsinterung mit einem Siliziumpulver einer spezifischen Blaine-Oberfläche von mindestens 5000 cm²/g, vorzugsweise von mindestens 7500 cm²/g durchgeführt wird.

4. Verfahren nach Anspruch 2 oder 3, dadurch gekennzeichnet, daß die Hitzeoxydation in Luft bei etwa 1400°C während mindestens 50 Stunden durchgeführt wird.

5. Verfahren nach einem der Ansprüche 2 bis 4, dadurch gekennzeichnet, daß die mit Aluminium angereicherten Siliziumnitrid-Teile während ihrer Hitzeoxydation einer vibrierenden Bewegung aussetzt.